# EUROPEAN PATENT APPLICATION

(11) **EP 4 535 376 A1**
(43) Date of publication of application: **09.04.2025**
(21) Application number: 24201513.9
(22) Date of filing: 20.09.2024
(51) Int. Cl.: H01B 17/58, H02G 15/013

(54) **SEAL STRUCTURE**

(30) Priority: 02.10.2023 JP 2023171566
(71) Applicant: Japan Aviation Electronics Industry, Limited, Tokyo 150-0043 (JP)
(72) Inventor: KANNO, Hideyuki, Tokyo 150-0043 (JP)
(74) Representative: Prüfer & Partner mbB Patentanwälte · Rechtsanwälte

(57) **Abstract**

A seal structure comprises a hood, a bushing made of elastomer and a holder. The hood has an attachment portion. The bushing has a flange and a tapered portion. The holder has an attached portion and a cover. Under a state where a cable passes through the seal structure in an up-down direction, the bushing is received in the holder, the attached portion faces the attachment portion, the holder is fixed to the hood, and thereby the seal structure takes an assembled state. Under the assembled state, the bushing is elastically deformed and is pressed against the holder, the hood and the cable. Meanwhile, the cover of the holder encloses the cable in a horizontal plane and covers an upper end of the bushing from above.

## Description

### BACKGROUND OF THE INVENTION

This invention relates to a seal structure configured to be attached to a cable.

For example, this type of seal structure is disclosed in JP2018-102114A (Patent Document 1).

Referring to Fig. 23, Patent Document 1 discloses a seal assembly (seal structure) 90 configured to be attached to a cable 99. The seal structure 90 comprises a housing (hood) 92, a rubber sealing sleeve (bushing) 94, a metal sealing cover (holder) 96 and a plastic bushing 98. The cable 99 has an end part which is fit into a hole formed in the bushing 94. The bushing 94 which holds the cable 99 as described above is inserted into a hole formed in the hood 92. The holder 96 which is attached to the hood 92 tightens the thus-inserted bushing 94 via the plastic bushing 98. As a result, the bushing is elastically deformed, and the end part of the cable 99 is received and sealed in the hood 92. The cable 99 is connected to a device (not shown) via the seal structure 90, and the seal structure 90 provides a sealing function such as a waterproof function and a foreign-substance-invasion prevention function.

For example, when a seal structure is used in a food factory, the seal structure may be disinfected with hot steam. According to the existing technique such as that of Patent Document 1, the sealing function of a bushing might be degraded by hot steam.

### SUMMARY OF THE INVENTION

It is therefore an object of the present invention to provide a seal structure which can prevent degradation of a sealing function of a bushing which might be caused by hot steam.

The present invention provides a seal structure configured to be attached to a cable. The seal structure comprises a hood, a bushing and a holder. The hood has an attachment portion. The attachment portion is formed with an introducing hole. The introducing hole passes through the attachment portion in an up-down direction. The bushing is made of elastomer and has a flange and a tapered portion. The flange has an upper surface and a lower surface. The tapered portion extends upward from the flange while being tapered. The bushing is formed with a holding hole. The holding hole passes through the bushing in the up-down direction. The holder has an attached portion, a first pressing portion, a second pressing portion and a cover. The holder is formed with a cavity and a passing hole. The passing hole passes through the cover in the up-down direction and communicates with the cavity. The first pressing portion and the second pressing portion are provided on an inner surface of the cavity. The seal structure takes a half-assembled state when the bushing is received in the cavity of the holder and the attached portion of the holder faces the attachment portion of the hood in the up-down direction under a state where the cable passes through the passing hole of the holder, the holding hole of the bushing and the introducing hole of the hood. The seal structure takes an assembled state when the holder under the half-assembled state is fixed to the hood. Under the assembled state, the first pressing portion of the holder is pressed against the upper surface of the flange of the bushing, the lower surface of the flange is pressed against the attachment portion of the hood, the second pressing portion of the holder is pressed against the tapered portion of the bushing, and an inner wall of the holding hole of the bushing is pressed against the cable. The cover of the holder under the assembled state encloses the cable in a horizontal plane perpendicular to the up-down direction and covers an upper end of the bushing from above.

According to the present invention, under the assembled state where the seal structure attached to the cable is assembled, the bushing is elastically deformed and is pressed against the holder, the hood and the cable. According to this configuration, the end part of the cable received in the hood can be sealed. In addition, the cover of the holder under the assembled state encloses the cable in the horizontal plane and covers the upper end of the bushing from above. This configuration arranges the bushing so that the bushing is not directly exposed to hot steam even when the seal structure is disinfected with hot steam. The present invention provides a seal structure which can prevent degradation of a seal function of a bushing which might be caused by hot steam.

An appreciation of the objectives of the present invention and a more complete understanding of its structure may be had by studying the following description of the preferred embodiment and by referring to the accompanying drawings.

### BRIEF DESCRIPTION OF THE DRAWINGS

Fig. 1 is a perspective view showing a seal structure according to an embodiment of the present invention, wherein the seal structure is attached to a cable and an object.
Fig. 2 is a perspective view showing the seal structure of Fig. 1, wherein the seal structure is attached to the cable but is apart from the object.
Fig. 3 is an exploded, perspective view showing the seal structure of Fig. 1, wherein an outline of the cable is illustrated with dashed line.
Fig. 4 is a perspective view showing a hood of the seal structure of Fig. 3, wherein screw holes of another hood according to a modification are illustrated with dashed line.
Fig. 5 is a partially cut-away, perspective view showing the hood of Fig. 4.
Fig. 6 is a cross-sectional view partially showing the hood of Fig. 5, wherein an outline of a hidden screw hole is illustrated with dashed line.
Fig. 7 is a perspective view showing a bushing of the seal structure of Fig. 3.
Fig. 8 is a partially cut-away, perspective view showing the bushing of Fig. 7, wherein imaginary boundary lines among parts of the bushing are illustrated with dashed line.
Fig. 9 is a front view showing the bushing of Fig. 7.
Fig. 10 is a cross-sectional view showing the bushing of Fig. 8, wherein imaginary boundary lines among parts of the bushing are illustrated with dashed line.
Fig. 11 is a bottom view showing the bushing of Fig. 7, wherein a position of an introducing hole and positions of screw holes relative to the bushing of the seal structure under an assembled state shown in Fig. 1 are illustrated with dashed line.
Fig. 12 is a perspective view showing a modification of the bushing of Fig. 7.
Fig. 13 is a front view showing the bushing of Fig. 12.
Fig. 14 is a perspective view showing another modification of the bushing of Fig. 7.
Fig. 15 is a front view showing the bushing of Fig. 14.
Fig. 16 is a perspective view showing a holder of the seal structure of Fig. 3.
Fig. 17 is a bottom view showing the holder of Fig. 16.
Fig. 18 is a partially cut-away, perspective view showing the holder of Fig. 16.
Fig. 19 is a cross-sectional view showing the holder of Fig. 18.
Fig. 20 is a perspective view showing a modification of the holder of Fig. 16.
Fig. 21 is a cross-sectional view partially showing the seal structure of Fig. 3, taken along a plane which includes a center axis of the cable and is perpendicular to a front-rear direction, wherein the seal structure is under a half-assembled state.
Fig. 22 is a cross-sectional view showing the seal structure of Fig. 21, wherein the seal structure is under the assembled state.

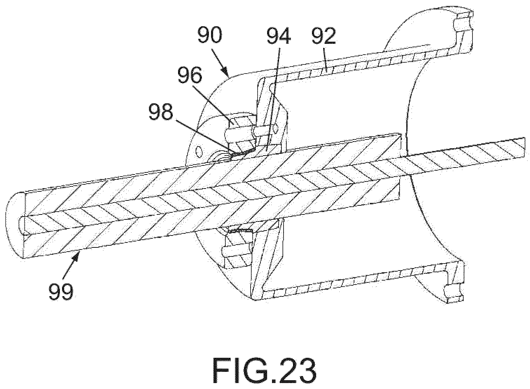

Fig. 23 is a partially cut-away, perspective view showing a seal structure of Patent Document 1.

### DETAILED DESCRIPTION

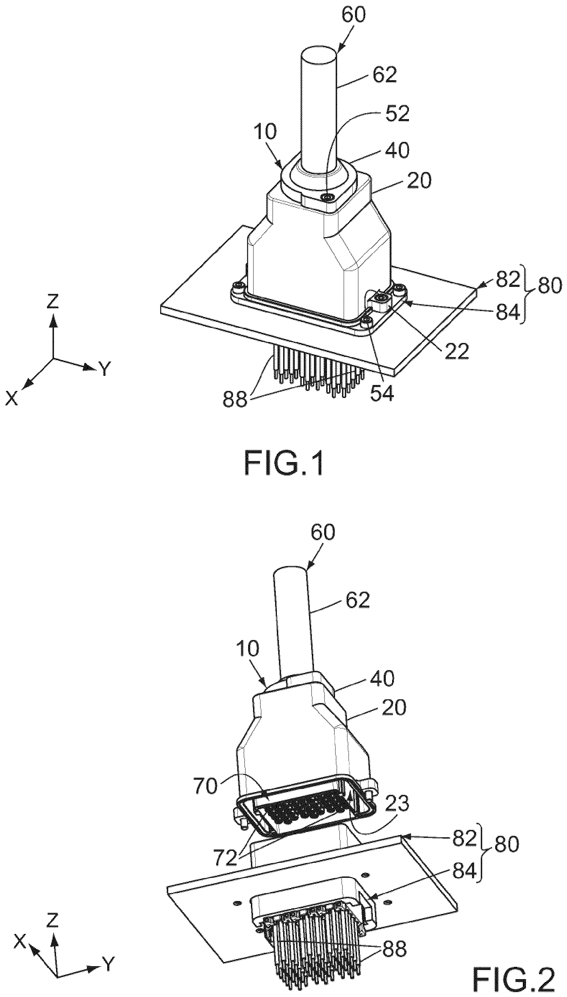

Referring to Figs. 1 and 2, a seal structure 10 of an embodiment of the present invention is a seal structure configured to be attached to a cable 60. The cable 60 of the present embodiment extends along an up-down direction and has a circular shape in a horizontal plane perpendicular to the up-down direction. The up-down direction of the present embodiment is the Z-direction. In the present embodiment, "upward" means the positive Z-direction, and "downward" means the negative Z-direction. The horizontal plane of the present embodiment is the XY-plane. The words such as the up-down direction and the horizontal plane do not indicate the absolute positional relation relative to the ground but merely indicate a relative positional relation under a definition in which an extending direction of the cable 60 attached to the seal structure 10 is the up-down direction.

The cable 60 of the present embodiment comprises a sheath 62 made of insulator and a plurality of wires (not shown). Each of the wires has a core wire (not shown) made of conductor and a coat (not shown) made of insulator and covering the core wire. The wires are enclosed by the sheath 62 in the horizontal plane. The cable 60 has a lower end part thereof where the sheath 62 is removed and the wires are exposed outward from the sheath 62. The sheath 62 of the present embodiment is made of flexible material. Thus, the cable 60 of the present embodiment is relatively soft and is easily deformed when receiving a force.

The cable 60 of the present embodiment is a so-called cabtire cable which has the aforementioned configuration. However, the cable 60 of the present invention is not limited to the cabtire cable. The configuration of the cable 60 can be modified as necessary. For example, the sheath 62 may be made of hard material. The number of the wires is not specifically limited.

Referring to Fig. 2, the seal structure 10 of the present embodiment includes a connector 70 incorporated therein. The connector 70 comprises a plurality of terminals 72. The seal structure 10 is attached to the cable 60 so that the lower end part of the cable 60 is covered by the seal structure 10. The wires (not shown) of the lower end part of the cable 60 are connected to the terminals 72 of the connector 70, respectively, when the seal structure 10 is attached to the cable 60.

Referring to Figs. 1 and 2, the seal structure 10 is configured to be fixed and attached to an object 80 under a state where the seal structure 10 is attached to the cable 60. The object 80 of the present embodiment comprises a mating connector 84 and a board 82 which is incorporated in a mating device (not shown). The mating connector 84 is fixed on the board 82. The mating connector 84 comprises a plurality of mating terminals (not shown) and a plurality of mating wires 88 which are connected to the mating terminals, respectively. The object 80 of the present embodiment has the aforementioned configuration. However, the configuration of the object 80 of the present invention is not specifically limited.

The seal structure 10 of the present embodiment is configured to be fixed to the mating connector 84. When the seal structure 10 is fixed to the mating connector 84, the connector 70 is mated with the mating connector 84, and the wires (not shown) of the cable 60 are electrically connected with the mating wires 88 via the terminals 72 and the mating terminals (not shown). Meanwhile, a lower end of the seal structure 10 is pressed against and is in secure contact with an upper surface of the mating connector 84, and the lower end part of the cable 60 is sealed in the seal structure 10. Thus, the cable 60 is connected to the mating device (not shown) via the seal structure 10, and the seal structure 10 provides a sealing function such as a waterproof function and a foreign-substance-invasion prevention function.

The seal structure 10 of the present embodiment is configured to be attached to the cable 60 and the object 80 as described above. For example, the object 80 is a part of the mating device (not shown) which is used in a food factory. The mating device and the seal structure 10 of this instance may be disinfected with hot steam having high-pressure. As described later, the seal structure 10 of the present embodiment is suitable for such usage. However, the usage of the seal structure 10 of the present invention is not specifically limited. The configuration of the seal structure 10 can be modified in accordance with the usage of the seal structure 10.

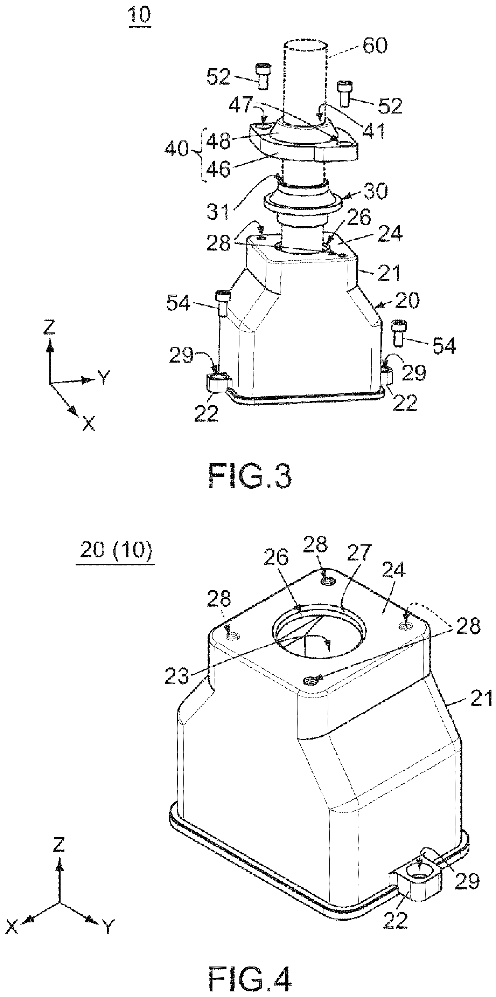

Referring to Fig. 3, the seal structure 10 of the present embodiment comprises a hood 20, a bushing 30 and a holder 40 in addition to the connector 70. The seal structure 10 can be assembled as described below. Firstly, the hood 20, the bushing 30 and the holder 40 are arranged in this order from bottom and are combined together. Then, the hood 20 is fixed to the holder 40 with two screws 52. Under an assembled state where the seal structure 10 attached to the cable 60 is assembled as shown in Figs. 1 and 2, the bushing 30 is located in the hood 20 and the holder 40 and is invisible from the outside. The seal structure 10 under the assembled state can be fixed to the object 80 (see Figs. 1 and 2) with two screws 54.

The seal structure 10 of the present embodiment has the aforementioned configuration. However, the present invention is not limited thereto. For example, the connector 70 (see Fig. 2) may be provided as necessary. The seal structure 10 may further comprise another member in addition to the aforementioned members.

Hereafter, explanation will be made about the hood 20 of the present embodiment.

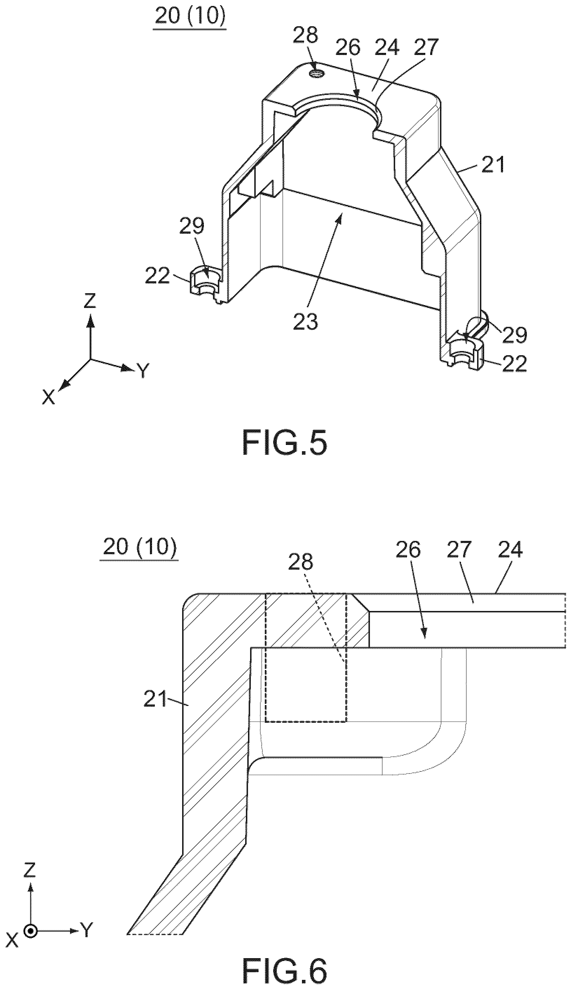

Referring to Figs. 4 and 5, the hood 20 of the present embodiment is made of hard material such as resin and has a main portion 21 and an attachment portion 24. The main portion 21 and the attachment portion 24 are integrally formed with each other. The hood 20 is formed with an accommodation portion 23. The accommodation portion 23 is a space in which the connector 70 (see Fig. 2) is arranged. The accommodation portion 23 is enclosed by the main portion 21 in the horizontal plane with no gap and opens downward.

The attachment portion 24 of the present embodiment is located at an upper end of the hood 20 and has a rectangular flat-plate shape in parallel to the horizontal plane. The attachment portion 24 covers the accommodation portion 23 from above. The attachment portion 24 is formed with an introducing hole 26. The introducing hole 26 is located at the middle of the attachment portion 24 in the horizontal plane and has a circular shape in the horizontal plane. The introducing hole 26 passes through the attachment portion 24 in the up-down direction. The thus-formed introducing hole 26 communicates with the accommodation portion 23 in the up-down direction. In other words, the accommodation portion 23 opens upward through the introducing hole 26. Referring to Fig. 3, the introducing hole 26 has a size larger than that of the cable 60 in the horizontal plane.

As shown in Figs. 4 and 5, the introducing hole 26 of the hood 20 of the present embodiment has an upper edge which is provided with a chamfered portion 27. The chamfered portion 27 encloses the introducing hole 26 in the horizontal plane and extends upward while spreading outward in the horizontal plane.

The attachment portion 24 of the hood 20 of the present embodiment is formed with two screw holes 28. The screw holes 28 are located at two of four corners of the attachment portion 24, respectively, the two of the four corners being not adjacent to each other. The thus-formed two screw holes 28 are located at opposite corners, respectively, with the introducing hole 26 located therebetween in the horizontal plane. Referring to Fig. 6, each of the screw holes 28 is a hole with its bottom. In other words, each of the screw holes 28 is unconnected to the accommodation portion 23.

As shown in Figs. 4 and 5, the main portion 21 of the present embodiment is provided with two projecting portions 22. The projecting portions 22 are located at a lower end of the main portion 21 in the up-down direction and are located at opposite sides of the main portion 21, respectively, in a lateral direction perpendicular to the up-down direction. The projecting portions 22 are located at the middle of the main portion 21 in a front-rear direction perpendicular to both the up-down direction and the lateral direction. Each of the projecting portions 22 projects outward from the main portion 21 in the lateral direction. The lateral direction of the present embodiment is the Y-direction. The front-rear direction of the present embodiment is the X-direction. In the present embodiment, "forward" means the positive X-direction, and "rearward" means the negative X-direction.

Each of the projecting portions 22 is formed with a fixing hole 29. Each of the fixing holes 29 passes through the projecting portion 22 in the up-down direction. Referring to Figs. 3 and 5 together with Fig. 1, the hood 20 is configured to be fixed to the object 80 by screwing the screws 54 into the mating connector 84 of the object 80 through the fixing holes 29. The lower end of the thus-fixed hood 20 is brought into secure contact with the mating connector 84. The fixing method using the screws 54 is simple and secure. However, the method of fixing the hood 20 to the object 80 of the present invention is not specifically limited.

The hood 20 of the present embodiment has the aforementioned configuration. However, the present invention is not limited thereto. The configuration of the hood 20 can be modified as necessary, provided that the hood 20 is provided with the attachment portion 24 formed with the introducing hole 26.

Hereafter, explanation will be made about the bushing 30 of the present embodiment.

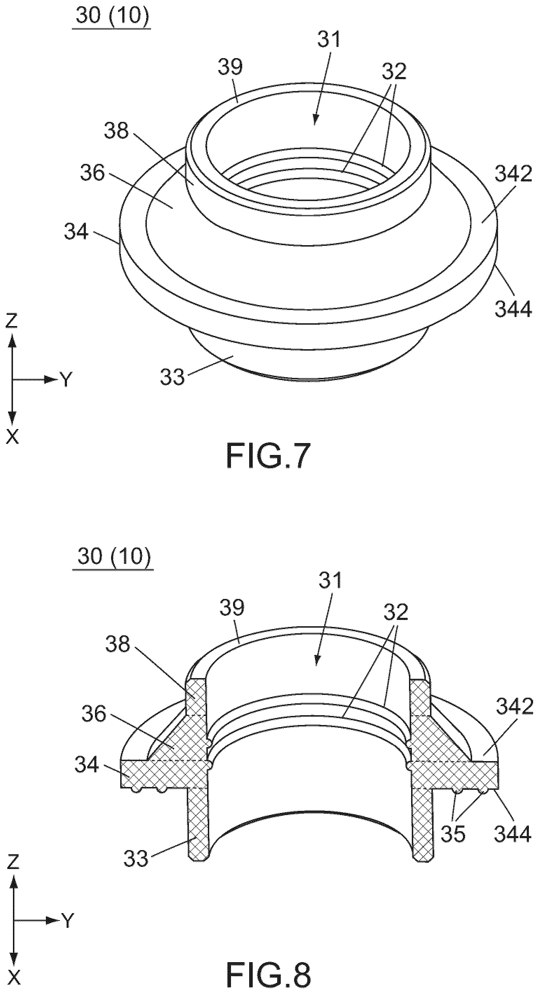

Referring to Figs. 7 to 10, the bushing 30 of the present embodiment is made of elastomer such as rubber and has a lower tube 33, a flange 34, a tapered portion 36 and an upper tube 38. The bushing 30 is elastically deformed easily when a force is applied to the bushing 30. The elastically deformed bushing 30 has a restoring force which tries to return the bushing 30 to its original shape.

The lower tube 33 is a lower end part of the bushing 30 and has a cylindrical shape. The lower tube 33 extends downward from the flange 34. In other words, the flange 34 is located above the lower tube 33. The flange 34 has a circular ring shape and protrudes outward in the horizontal plane beyond an outer surface of the lower tube 33 in the horizontal plane. The tapered portion 36 has a hollow, truncated cone shape. The tapered portion 36 extends upward from the flange 34 while being tapered. The upper tube 38 is an upper end part of the bushing 30 and has a cylindrical shape. The upper tube 38 extends upward from the tapered portion 36. The upper tube 38 has an upper end 39 which is located at the upper end of the bushing 30.

The bushing 30 of the present embodiment has the aforementioned portions. However, the present invention is not limited thereto. For example, the lower tube 33 and the upper tube 38 may be provided as necessary. The shape of each of the flange 34 and the tapered portion 36 is not specifically limited, provided that the tapered portion 36 is tapered upward, and that the flange 34 protrudes from a lower end of the tapered portion 36 in the horizontal plane. The bushing 30 may further have another portion in addition to the aforementioned portions.

Referring to Figs. 7, 8 and 10, the bushing 30 is formed with a holding hole 31. The holding hole 31 is a cylindrical space and is located at the middle of the bushing 30 in the horizontal plane. The holding hole 31 is enclosed by the lower tube 33, the flange 34, the tapered portion 36 and the upper tube 38 in the horizontal plane with no gap and opens upward and downward. In other words, the holding hole 31 passes through the bushing 30 in the up-down direction. Referring to Fig. 3, the holding hole 31 has a size same as that of the cable 60 in the horizontal plane.

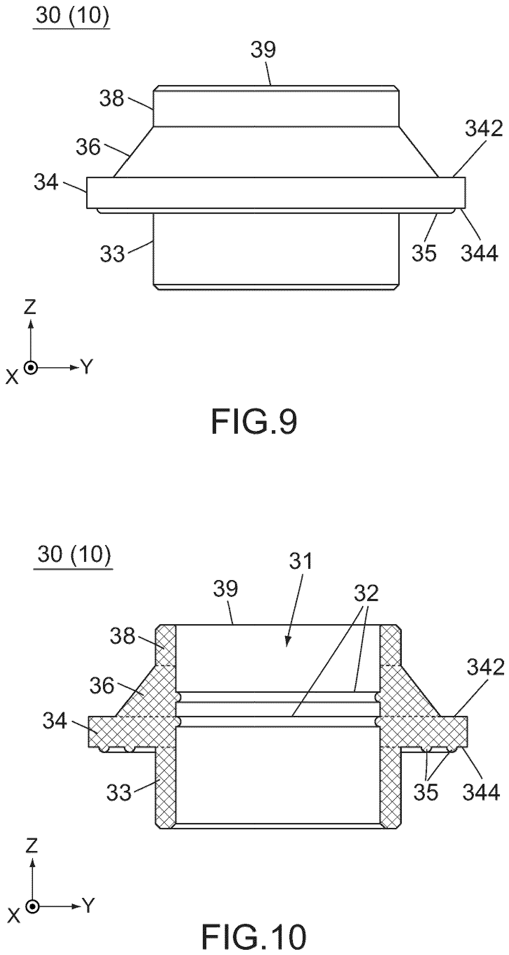

Referring to Figs. 8 and 10, the inner wall of the holding hole 31 of the present embodiment is provided with two inner libs 32. Each of the inner libs 32 has a ring-like shape in parallel to the horizontal plane and encloses the holding hole 31 in the horizontal plane. The two inner libs 32 are vertically arranged. The upper inner lib 32 is located at a position which corresponds to the tapered portion 36 in the up-down direction and projects inward in the horizontal plane. The lower inner lib 32 is located at a position which corresponds to the flange 34 in the up-down direction and projects inward in the horizontal plane.

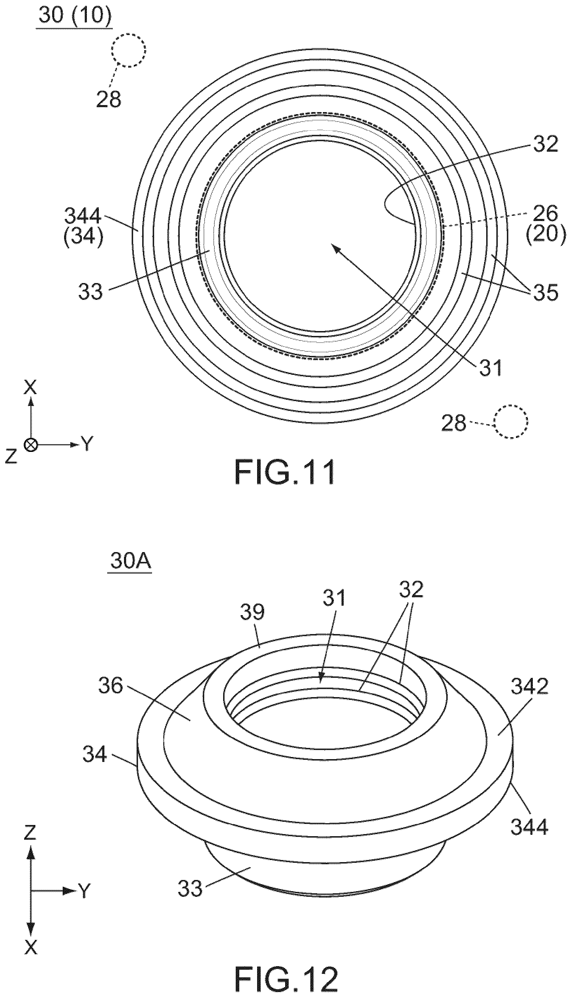

Referring to Figs. 8 and 11, the flange 34 has an upper surface 342 and a lower surface 344. Each of the upper surface 342 and the lower surface 344 of the present embodiment is a flat surface in parallel to the horizontal plane. Referring to Figs. 10 and 11, the lower surface 344 of the present embodiment is provided with two libs 35. Each of the libs 35 has a ring-like shape and projects downward. In detail, each of the libs 35 has a ring-like shape located around the holding hole 31 in the horizontal plane. One of the libs 35 encloses a remaining one of the libs 35 in the horizontal plane.

The bushing 30 of the present embodiment has the aforementioned configuration. However, the present invention is not limited thereto. The configuration of the bushing 30 can be modified as necessary, provided that the bushing 30 is provided with the flange 34 and the tapered portion 36 in which the holding hole 31 is formed.

Hereafter, explanation will be made about the holder 40 (see Fig. 3) of the present embodiment.

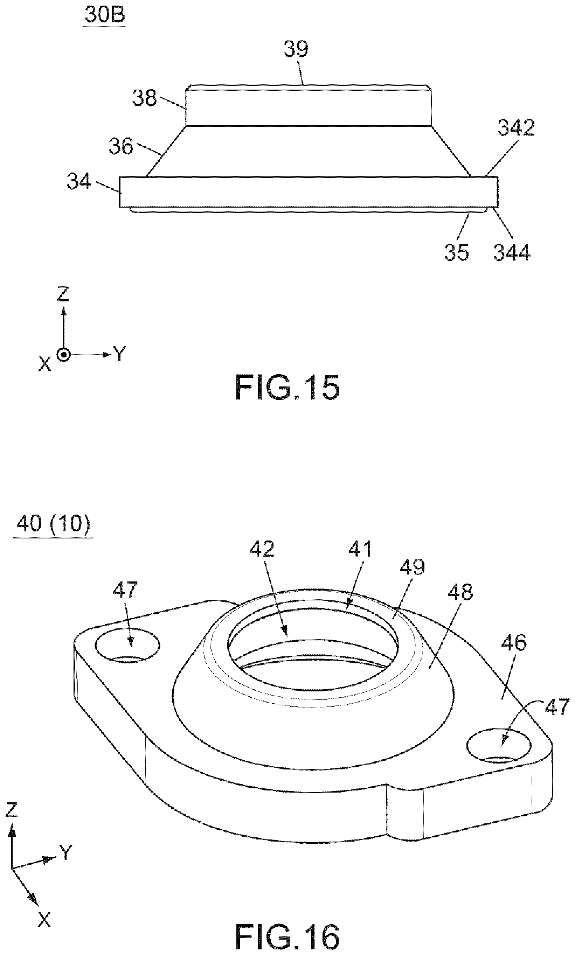

Referring to Figs. 16, 18 and 19, the holder 40 of the present embodiment is made of hard material such as resin and has an attached portion 46, an enclosing portion 48 and a cover 49. The attached portion 46, the enclosing portion 48 and the cover 49 are integrally molded with each other. The holder 40 is formed with a cavity 42. The cavity 42 is a space configured to receive the bushing 30 (see Fig. 3). The cavity 42 is enclosed by the attached portion 46 and the enclosing portion 48 in the horizontal plane with no gap and opens downward.

The attached portion 46 of the present embodiment is located at the lower end of the holder 40 and has a flat-plate shape in parallel to the horizontal plane. The enclosing portion 48 has a hollow, truncated cone shape and extends upward from the attached portion 46 while being tapered. The cover 49 is located at the upper end of the holder 40 and has a circular ring shape in parallel to the horizontal plane. The cover 49 extends inward in the horizontal plane from the upper end of the enclosing portion 48.

The cover 49 covers the cavity 42 from above. The cover 49 is formed with a passing hole 41. Thus, the holder 40 is formed with the passing hole 41. The passing hole 41 of the present embodiment is located at the middle of the cover 49 in the horizontal plane and has a circular shape in the horizontal plane. The passing hole 41 passes through the cover 49 in the up-down direction and communicates with the cavity 42. In other words, the cavity 42 opens upward through the passing hole 41. Referring to Fig. 3, the passing hole 41 has a size same as that of the cable 60 in the horizontal plane.

Referring to Figs. 16 to 19, the attached portion 46 is formed with two fixing holes 47. Each of the fixing holes 47 passes through the attached portion 46 in the up-down direction. The two fixing holes 47 are located on opposite sides of the holder 40 in the horizontal plane, respectively, with the enclosing portion 48 located therebetween. More specifically, referring to Fig. 3, the two fixing holes 47 are located at positions which correspond to the two screw holes 28 of the hood 20 in the horizontal plane, respectively. As described later, the fixing holes 47 and the screw holes 28 are portions for fixing the holder 40 to the hood 20.

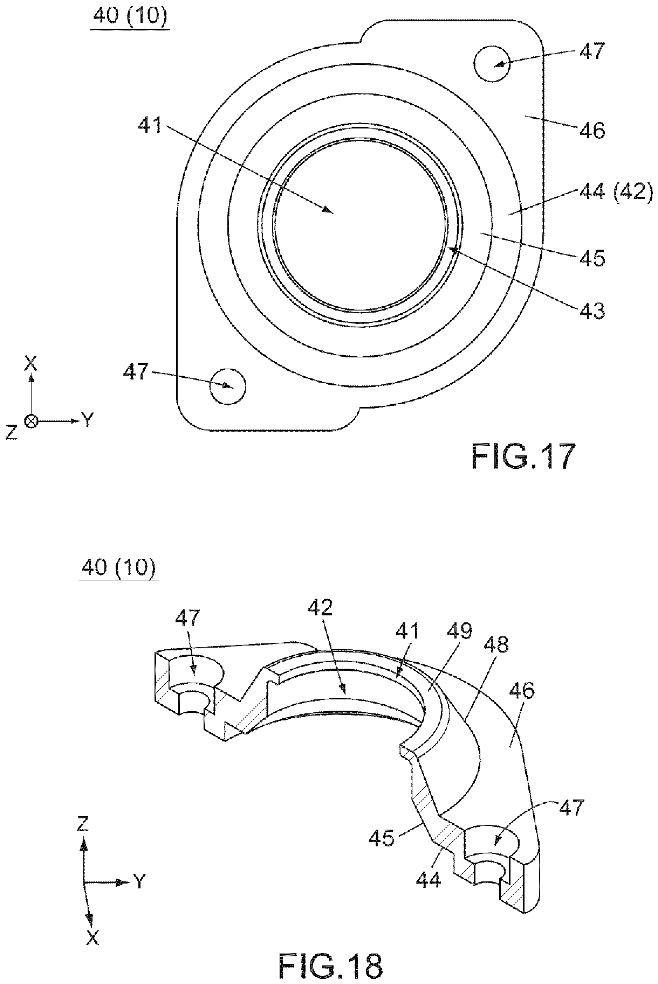

As shown in Figs. 17 to 19, the holder 40 has a first pressing portion 44 and a second pressing portion 45. Each of the first pressing portion 44 and the second pressing portion 45 is a surface of an inner wall which encloses the cavity 42. Thus, the first pressing portion 44 and the second pressing portion 45 are provided on an inner surface of the cavity 42. The first pressing portion 44 is a lower surface of a part of the attached portion 46 which is located between the enclosing portion 48 and the fixing holes 47 in the horizontal plane. The first pressing portion 44 is a flat surface in parallel to the horizontal plane. The second pressing portion 45 is an inner surface of the attached portion 46 in the horizontal plane. The second pressing portion 45 has a truncated cone shape and extends upward from an inner edge of the first pressing portion 44 in the horizontal plane while being tapered.

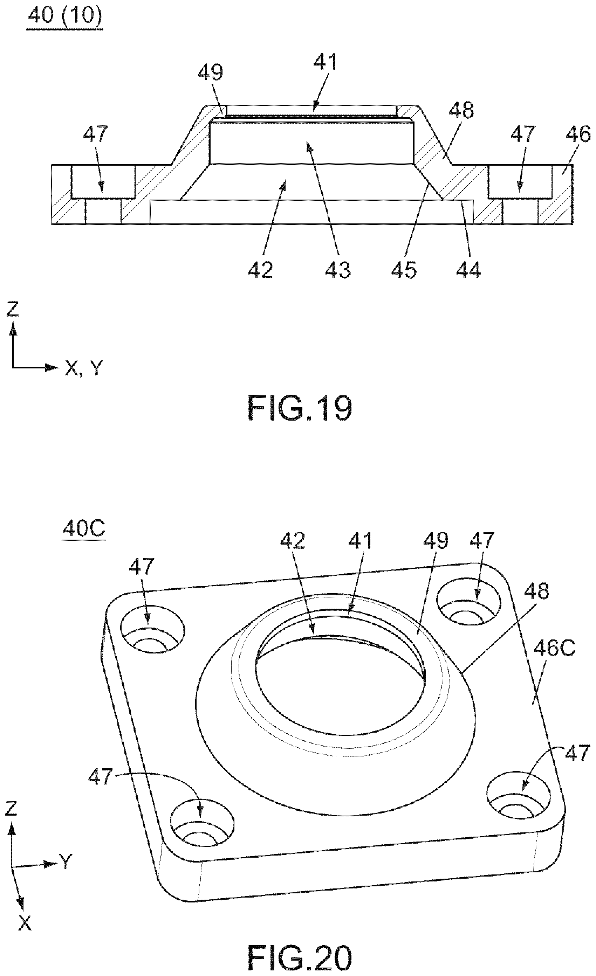

Referring to Fig. 19, the cavity 42 of the holder 40 of the present embodiment has a receiving portion 43. Thus, the holder 40 is formed with the receiving portion 43. The receiving portion 43 is an upper part of the cavity 42 and is located above the second pressing portion 45. Referring to Fig. 19 together with Fig. 10, the receiving portion 43 is a space configured to receive the upper tube 38 of the bushing 30 and has a cylindrical shape corresponding to the upper tube 38. The receiving portion 43 has a size slightly larger than that of the upper tube 38 in the horizontal plane.

The holder 40 of the present embodiment has the aforementioned configuration. However, the present invention is not limited thereto. The configuration of the holder 40 can be modified as necessary, provided that the holder 40 has the attached portion 46, the first pressing portion 44, the second pressing portion 45 and the cover 49 and is formed with the cavity 42 and the passing hole 41. For example, the receiving portion 43 and the fixing holes 47 may be provided as necessary.

Referring to Fig. 3, hereafter, explanation will be made about an assembly method of the seal structure 10 of the present embodiment. The assembly method described below is merely an example and can be modified as necessary.

Firstly, the hood 20, the bushing 30 and the holder 40 are arranged in this order from bottom in the up-down direction. Then, the cable 60 is arranged so that the cable 60 passes through the passing hole 41 of the holder 40, the holding hole 31 of the bushing 30 and the introducing hole 26 of the hood 20. Meanwhile, the lower end part of the cable 60 is arranged in the accommodation portion 23 (see Fig. 4) of the hood 20.

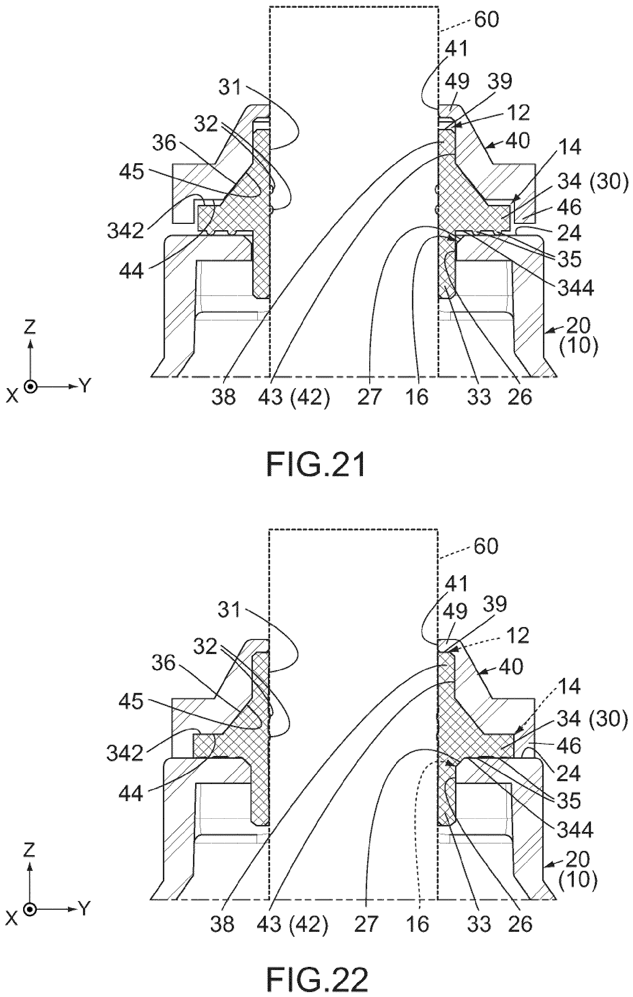

Then, referring to Fig. 21 together with Fig. 3, the bushing 30 is received in the cavity 42 of the holder 40. Meanwhile, the upper tube 38 of the bushing 30 is inserted into the receiving portion 43 of the cavity 42. The bushing 30 can be positioned relative to the holder 40 by inserting the upper tube 38 into the receiving portion 43. Then, the lower tube 33 of the bushing 30 is inserted into the introducing hole 26 of the hood 20. The bushing 30 and the holder 40 can be positioned relative to the hood 20 by inserting the lower tube 33 into the introducing hole 26. The cable 60 extends straight in the up-down direction as a result of the aforementioned positioning. After the aforementioned positioning, the attached portion 46 of the holder 40 faces the attachment portion 24 of the hood 20 in the up-down direction, and the seal structure 10 takes a half-assembled state as shown in Fig. 21.

Summarizing the explanation described above with reference to Fig. 21, the seal structure 10 takes the half-assembled state when the bushing 30 is received in the cavity 42 of the holder 40 and the attached portion 46 of the holder 40 faces the attachment portion 24 of the hood 20 in the up-down direction under a state where the cable 60 passes through the passing hole 41 of the holder 40, the holding hole 31 of the bushing 30 and the introducing hole 26 of the hood 20.

Lower ends of the libs 35 of the bushing 30 are in contact with the upper surface of the attachment portion 24 of the hood 20 under the half-assembled state.

Therefore, the flange 34 of the bushing 30 is located above the attachment portion 24 with a distance formed therebetween which is equal to a size of each of the libs 35 in the up-down direction. The tapered portion 36 of the bushing 30 is in contact with the second pressing portion 45 of the holder 40. The thus-arranged holder 40 is located above the attachment portion 24 with a distance formed therebetween in the up-down direction.

The seal structure 10 under the half-assembled state is formed with various gaps (spaces). For example, under the half-assembled state, the seal structure 10 is formed with a gap 12 which is located between the cover 49 of the holder 40 and the upper tube 38 of the bushing 30 in the up-down direction. According to the present embodiment, the whole of the upper end 39 of the upper tube 38 is located below a lower surface of the cover 49 with a distance formed therebetween. The seal structure 10 is also formed with a gap 14 which spreads above and below the flange 34 of the bushing 30 and spreads outward of the flange 34 in the horizontal plane. The seal structure 10 is also formed with a gap 16 which is located between the lower tube 33 of the bushing 30 and the attachment portion 24 of the hood 20. These gaps may work as invasion paths through which water and foreign substance would enter into the hood 20.

Then, referring to Figs. 21 and 22, the holder 40 is pressed against the hood 20 in the up-down direction so that the lower surface of the attached portion 46 of the holder 40 is brought into secure contact with the upper surface of the attachment portion 24 of the hood 20. The seal structure 10 takes the assembled state as shown in Fig. 22 when the thus-pressed holder 40 is fixed to the hood 20. Thus, the seal structure 10 takes the assembled state when the holder 40 under the half-assembled state is fixed to the hood 20.

Referring to Fig. 21 together with Fig. 3, according to the present embodiment, the holder 40 under the half-assembled state is configured to be fixed to the hood 20 by screwing the screws 52 into the screw holes 28 of the hood 20 through the fixing holes 47 of the holder 40. The holder 40 can be simply and securely fixed to the hood 20 by this screw fixing. However, the present invention is not limited thereto. Referring to Fig. 22, the fixing method of the holder 40 to the hood 20 is not specifically limited, provided that the lower surface of the attached portion 46 of the holder 40 is pressed against and is in secure contact with the upper surface of the attachment portion 24 of the hood 20 under the assembled state. For example, the holder 40 may be fixed to the hood 20 by a snap lock without using the screws 52. According to this instance, the fixing holes 47 do not need to be provided.

Referring to Figs. 21 and 22, the bushing 30 is elastically deformed under the assembled state where the seal structure 10 attached to the cable 60 is assembled as shown in Fig.22. In detail, the first pressing portion 44 of the holder 40 presses the upper surface 342 of the flange 34 of the bushing 30 downward so that the bushing 30 is elastically deformed. In addition, the second pressing portion 45 of the holder 40 presses the tapered portion 36 of the bushing 30 downward and inward in the horizontal plane so that the bushing 30 is elastically deformed. The elastically deformed bushing 30 is pressed against the holder 40, the hood 20 and the cable 60 by its restoring force.

The tapered portion 36 of the bushing 30 is compressed in each of the up-down direction and the horizontal plane when the bushing 30 is elastically deformed. As a result, the upper tube 38 of the bushing 30 is stretched in the up-down direction. The thus-elastically deformed upper tube 38 fills the gap 12. In detail, the upper tube 38 is received in the receiving portion 43 of the holder 40 and fills the receiving portion 43 under the assembled state. The thus-received upper tube 38 is brought into contact with the cover 49 of the holder 40 under the assembled state. Moreover, the upper tube 38 is pressed against an inner wall surface of the holder 40 and the cable 60 under the assembled state. In addition, the inner libs 32 of the bushing 30 are pressed against the cable 60 under the assembled state. In detail, the inner libs 32 are pressed against the cable 60 while being compressed. As a result, the invasion path of water and foreign substance, which extends along an outer surface of the cable 60 in the horizontal plane, is blocked.

The flange 34 of the bushing 30 is compressed in the up-down direction and is stretched in the horizontal plane when the bushing 30 is elastically deformed. The thus-elastically deformed flange 34 fills a part of the gap 14 which is located between the flange 34 and the attached portion 46 of the holder 40 in the horizontal plane. In detail, the flange 34 is received in a lower end part of the cavity 42 of the holder 40 and fills the lower end part of the cavity 42 under the assembled state. The lower surface 344 of the flange 34 is pressed against the upper surface of the attachment portion 24 of the hood 20. In addition, the libs 35 of the flange 34 are pressed against the upper surface of the attachment portion 24 while being compressed. As a result, the invasion path of water and foreign substance, which passes between the attachment portion 24 and the lower surface 344 of the bushing 30, is blocked.

The lower tube 33 of the bushing 30 is stretched in each of the up-down direction and the horizontal plane when the bushing 30 is elastically deformed. The thus-elastically deformed lower tube 33 fills the gap 16. In detail, the lower tube 33 is received in the introducing hole 26 of the hood 20 under the assembled state. Meanwhile, the lower tube 33 is stretched as a result of the compression of the tapered portion 36 and the flange 34 and fills the introducing hole 26 under the assembled state. The flange 34 and the lower tube 33 which are elastically deformed fill the chamfered portion 27 formed around the introducing hole 26.

Summarizing the explanation described above, under the assembled state, the first pressing portion 44 of the holder 40 is pressed against the upper surface 342 of the flange 34 of the bushing 30, the lower surface 344 of the flange 34 is pressed against the attachment portion 24 of the hood 20, the second pressing portion 45 of the holder 40 is pressed against the tapered portion 36 of the bushing 30, and the inner wall of the holding hole 31 of the bushing 30 is pressed against the cable 60. According to this mechanism, the lower end part of the cable 60 received in the hood 20 can be sealed. In addition, the cable 60 can be securely held so that the cable 60 extends straight in the up-down direction.

According to the present embodiment, the gaps 12, 14 and 16 formed under the half-assembled state are filled under the assembled state. However, the present invention is not limited thereto. For example, the gap 12 may be already filled under the half-assembled state. However, according to this configuration, an excessively large force is required to elastically deform the bushing 30 when the cable 60 is hard. Accordingly, the present embodiment is preferable unless there is specific reason.

According to the present embodiment, the gaps 12, 14 and 16 are completely filled under the assembled state. However, the present invention is not limited thereto. The gaps 12, 14 and 16 may be partially filled under the assembled state, provided that invasion paths of water and foreign substance are sufficiently blocked under the assembled state. For example, the upper end 39 of the upper tube 38 may be located below the cover 49 of the holder 40 with a distance formed therebetween under the assembled state.

According to the present embodiment, the lower end part of the cable 60 can be more securely sealed since the two inner libs 32 and the two libs 35 are provided. Referring to Fig. 22 together with Fig. 11, under the assembled state, the libs 35 are pressed against a part of the attachment portion 24 which is located between the screw holes 28 and the introducing hole 26 in the horizontal plane. According to this configuration, the libs 35 can be more securely pressed against the attachment portion 24, and the lower end part of the cable 60 can be more securely sealed. However, the present invention is not limited thereto. For example, the number of the inner libs 32 may be one, three or more. One of the inner libs 32 may be located at a position which corresponds to the tapered portion 36 in the up-down direction. Similarly, the number of the libs 35 may be one, three or more. Moreover, the inner libs 32 and the libs 35 may be provided as necessary.

Referring to Fig. 6, the screw holes 28 of the hood 20 of the present embodiment are not connected to the accommodation portion 23 which is an inner space of the hood 20. Therefore, the screw holes 28 do not affect the sealing function of the seal structure 10.

Referring to Figs. 21 and 22, the chamfered portion 27 of the present embodiment not only works as a guide portion which guides the lower tube 33 of the bushing 30 when the lower tube 33 is inserted into the introducing hole 26 of the hood 20 but also works as a space which receives a part of the elastically deformed flange 34 and a part of the elastically deformed lower tube 33. However, the present invention is not limited thereto. For example, the chamfered portion 27 may be provided as necessary.

Referring to Fig. 22, the cover 49 of the holder 40 under the assembled state encloses the cable 60 in the horizontal plane and covers the upper end 39 of the bushing 30 from above. This configuration arranges the bushing 30 so that the bushing 30 is not directly exposed to hot steam even when the seal structure 10 is disinfected with hot steam. Moreover, a part of the bushing 30 which is directly exposed to hot steam can be limited by blocking the gap 12 even when another gap is formed between the cover 49 and the outer surface of the cable 60. The present embodiment provides the seal structure 10 which can prevent degradation of the sealing function of the bushing 30 which might be caused by hot steam.

According to the present embodiment, the cover 49 of the holder 40 is in contact with the cable 60 in the horizontal plane. This configuration can more reliably prevent degradation of the sealing function of the bushing 30 which might be caused by hot steam. However, this configuration makes it difficult for a hard cable 60 to pass through the passing hole 41 of the holder 40. Considering from another viewpoint, when a large gap is formed between the cover 49 and the cable 60 in the horizontal plane, the upper end 39 of the bushing 30 might be partially deteriorated because of hot steam. However, even if the upper end 39 of the bushing 30 is partially deteriorated, the sealing function is not substantially degraded. Accordingly, from a viewpoint of preventing the deterioration of the bushing 30 as much as possible and making the cable 60 easily pass through the passing hole 41, it is preferable to provide a gap as small as possible between the cover 49 and the cable 60.

The present embodiment can be further variously modified as described below in addition to the already described various modifications.

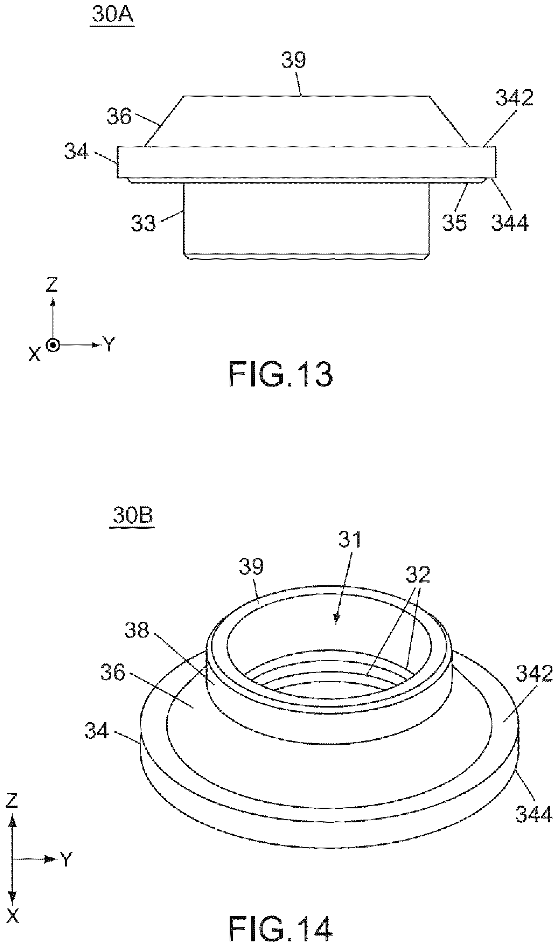

Comparing Figs. 12 and 13 with Figs. 7 and 9, a bushing 30A according to a first modification does not have the upper tube 38. The bushing 30A has the configuration same as that of the bushing 30 except for this difference. According to this modification, the tapered portion 36 has the upper end 39 which is the upper end of the bushing 30A. Referring to Fig. 12 together with Fig. 22, although the bushing 30A is used instead of the bushing 30, the present modification provides the seal structure 10 which can prevent degradation of the sealing function of the bushing 30A which might be caused by hot steam. However, when the bushing 30A is used, additional modification of the other members such as removal of the receiving portion 43 of the holder 40 should be necessary.

Comparing Figs. 14 and 15 with Figs. 7 and 9, a bushing 30B according to a second modification does not have the lower tube 33. The bushing 30B has the configuration same as that of the bushing 30 except for this difference. Referring to Fig. 14 together with Fig. 22, although the bushing 30B is used instead of the bushing 30, the present modification provides the seal structure 10 which can prevent degradation of the sealing function of the bushing 30B which might be caused by hot steam. However, when the bushing 30B is used, additional modification of the other members such as provision of a mechanism which positions the bushing 30B relative to the hood 20 should be necessary.

Referring to Fig. 7 together with Figs. 12, 14 and 22, a size of the upper tube 38 in the up-down direction may be made smaller instead of the removal of the upper tube 38. Similarly, a size of the lower tube 33 in the up-down direction may be made smaller instead of the removal of the lower tube 33. Moreover, both the upper tube 38 and the lower tube 33 may be removed.

Comparing Fig. 20 with Fig. 16, a holder 40C according to a third modification has an attached portion 46C instead of the attached portion 46. The attached portion 46C has a rectangular shape and is formed with four of the fixing holes 47. The holder 40C has the configuration same as that of the holder 40 except for this difference. Referring to Fig. 20 together with Fig. 22, although the holder 40C is used instead of the holder 40, the present modification provides the seal structure 10 which can prevent degradation of the sealing function of the bushing 30 which might be caused by hot steam. Referring to Fig. 20 together with Fig. 4, when the holder 40C is used, the hood 20 should be formed with four of the screw holes 28. The sealing function can be made more effective by screwing the four corners of the holder 40C to the hood 20.

Referring to Fig. 3, according to the present embodiment, only one cable 60 is attached to the seal structure 10. However, the present invention is not limited thereto. Two or more of the cables 60 may be attached to the seal structure 10. More specifically, the hood 20 may be formed with two or more of the introducing holes 26. According to this instance, the holder 40 may be formed with two or more of the passing holes 41 which correspond to the introducing holes 26, respectively, and two or more of the bushings 30 each formed with the one holding hole 31 may be provided. According to this instance, the holder 40 may be formed with two or more of the cavities 42 which correspond to the bushings 30, respectively. Instead, two or more of the holders 40 each formed with the one passing hole 41 may be provided, and two or more of the bushings 30 each formed with the one holding hole 31 may be provided.

## Claims

1. A seal structure (10) configured to be attached to a cable (60), wherein:
the seal structure (10) comprises a hood (20), a bushing (30, 30A, 30B) and a holder (40, 40C);
the hood (20) has an attachment portion (24);
the attachment portion (24) is formed with an introducing hole (26);
the introducing hole (26) passes through the attachment portion (24) in an up-down direction (Z-direction);
the bushing (30, 30A, 30B) is made of elastomer and has a flange (34) and a tapered portion (36);
the flange (34) has an upper surface (342) and a lower surface (344);
the tapered portion (36) extends upward from the flange (34) while being tapered;
the bushing (30, 30A, 30B) is formed with a holding hole (31);
the holding hole (31) passes through the bushing (30, 30A, 30B) in the up-down direction (Z-direction);
the holder (40, 40C) has an attached portion (46, 46C), a first pressing portion (44), a second pressing portion (45) and a cover (49);
the holder (40, 40C) is formed with a cavity (42) and a passing hole (41);
the passing hole (41) passes through the cover (49) in the up-down direction (Z-direction) and communicates with the cavity (42);
the first pressing portion (44) and the second pressing portion (45) are provided on an inner surface of the cavity (42);
the seal structure (10) takes a half-assembled state when the bushing (30, 30A, 30B) is received in the cavity (42) of the holder (40, 40C) and the attached portion (46, 46C) of the holder (40, 40C) faces the attachment portion (24) of the hood (20) in the up-down direction (Z-direction) under a state where the cable (60) passes through the passing hole (41) of the holder (40, 40C), the holding hole (31) of the bushing (30, 30A, 30B) and the introducing hole (26) of the hood (20);
the seal structure (10) takes an assembled state when the holder (40, 40C) under the half-assembled state is fixed to the hood (20);
under the assembled state, the first pressing portion (44) of the holder (40, 40C) is pressed against the upper surface (342) of the flange (34) of the bushing (30, 30A, 30B), the lower surface (344) of the flange (34) is pressed against the attachment portion (24) of the hood (20), the second pressing portion (45) of the holder (40, 40C) is pressed against the tapered portion (36) of the bushing (30, 30A, 30B), an inner wall of the holding hole (31) of the bushing (30, 30A, 30B) is pressed against the cable (60); and
the cover (49) of the holder (40, 40C) under the assembled state encloses the cable (60) in a horizontal plane (XY-plane) perpendicular to the up-down direction (Z-direction) and covers an upper end of the bushing (30, 30A, 30B) from above.

2. The seal structure (10) as recited in claim 1, wherein:
the bushing (30, 30A, 30B) has an upper tube (38);
the upper tube (38) extends upward from the tapered portion (36);
the cavity (42) of the holder (40, 40C) has a receiving portion (43); and
the upper tube (38) is received in the receiving portion (43) under the assembled state.

3. The seal structure (10) as recited in claim 2, wherein under the half-assembled state, the seal structure (10) is formed with a gap (12) which is located between the cover (49) of the holder (40, 40C) and the upper tube (38) of the bushing (30, 30A, 30B) in the up-down direction (Z-direction).

4. The seal structure (10) as recited in claim 2 or 3, wherein the upper tube (38) is brought into contact with the cover (49) under the assembled state.

5. The seal structure (10) as recited in one of claims 1 to 4, wherein:
the bushing (30, 30A, 30B) has a lower tube (33);
the lower tube (33) extends downward from the flange (34); and
the lower tube (33) is received in the introducing hole (26) of the hood (20) under the assembled state.

6. The seal structure (10) as recited in claim 5, wherein the introducing hole (26) of the hood (20) has an upper edge which is formed with a chamfered portion (27).

7. The seal structure (10) as recited in one of claims 1 to 6, wherein:
the lower surface (344) of the flange (34) of the bushing (30, 30A, 30B) is provided with a lib (35);
the lib (35) has a ring-like shape and projects downward;
the attachment portion (24) of the hood (20) is formed with a screw hole (28);
the holder (40, 40C) under the half-assembled state is configured to be fixed to the hood (20) by screwing a screw into the screw hole (28); and
under the assembled state, the lib (35) is pressed against a part of the attachment portion (24) which is located between the screw hole (28) and the introducing hole (26) in the horizontal plane (XY-plane).

8. The seal structure (10) as recited in one of claims 1 to 7, wherein:
the inner wall of the holding hole (31) of the bushing (30, 30A, 30B) is provided with an inner lib (32);
the inner lib (32) is located at a position which corresponds to the tapered portion (36) in the up-down direction (Z-direction) and projects inward in the horizontal plane (XY-plane); and
the inner lib (32) is pressed against the cable (60) under the assembled state.
